# EUROPEAN PATENT SPECIFICATION

(11) **EP 0 529 799 B1**
(45) Date of publication and mention of the grant of the patent: **22.01.1997**
(21) Application number: 92306681.5
(22) Date of filing: 22.07.1992
(51) Int. Cl.: C08L 71/12, C08L 77/00

(54) **A process for producing a compatible thermoplastic resin composition comprising polyphenylene ether and polyamide.**
Verfahren zur Herstellung einer verträglichen Harzzusammensetzung enthaltend Polyphenylenether und Polyamid.
Procédé de fabrication d'une composition de résine thermoplastique compatible comprenante du polyphénylène éther et du polyamide

(30) Priority: 22.07.1991 JP 206486/91
(43) Date of publication of application: 03.03.1993
(73) Proprietor: SUMITOMO CHEMICAL COMPANY LIMITED, Osaka-shi, Osaka 541 (JP)
(72) Inventor: Nagaoka, Kenji, Ichihara-shi, Chiba 299-01 (JP); Sanada, Takashi, Ichihara-shi, Chiba 299-01 (JP); Ijichi, Yasuhito, Ichihara-shi, Chiba 299-01 (JP)
(74) Representative: Cresswell, Thomas Anthony

(56) References cited:
- EP-A- 0 231 626
- EP-A- 0 269 748

## Description

The present invention relates to a process for producing thermoplastic resin compositions which can be made into three-dimensional articles and sheets by injection molding, extrusion molding and blow molding and can be used as automobile parts and electrical parts.

More particularly, it relates to a novel process for producing thermoplastic resin compositions mainly composed of at least one compatibilizing agent, polyphenylene ether (PPE) and polyamide in which an impact strength modifier having a styrene-containing A-B-A block structure constitutes a specific micro phase separation structure, thereby to balance heat resistance and impact resistance.

U. S. Patent No. 4,315,086 discloses, as compatibilizing agents for polyamides and polyphenylene ethers, liquid diene polymers, epoxy compounds and compounds having in molecule both (a) carbon-carbon double bond or carbon-carbon triple bond and (b) carboxylic acid group, acid anhydride group, acid amide group, imide group, carboxylate group, amino group or hydroxyl group. The above patent further discloses, as impact strength modifiers, ethylene propylene rubbers, ethylene propylene polyene rubbers or these rubbers modified with unsaturated carboxylic acids, SBR, polybutadienes, diblock copolymers or triblock copolymers of polystyrene-diene rubbers and partial hydrogenated products thereof.

Japanese Patent Kokai Nos. 59-59724 and 59-86653, U.S. Patent No. 4,654,405 and PCT Laid-Open Application W087/00540 disclose processes for producing compositions by grafting unsaturated carboxylic acids on polyphenylene ethers in the presence or absence of free-radical initiators and then mixing polyamides with the products.

EPC Laid-Open Application EP-0046040 discloses alkenyl aromatic compounds, α,β-unsaturated dicarboxylic acid anhydrides or imide compounds thereof as compatibilizing agents for polyphenylene ethers and polyamides.

PCT Laid-Open Application WO85/05372 discloses aliphatic polycarboxylic acids such as malic acid, U.S. Patent No. 4,659,760 discloses polyethylene oxide waxes, U.S. Patent No. 4,659,763 discloses quinones, U.S. Patent No. 4,732,937 discloses polyphenylene ethers made functional by epoxy compounds, and U.S. Patent No. 4,600,741 discloses polyfunctional compounds comprising anhydrotrimellitic acid chloride as compatibilizing agents for polyphenylene ethers and polyamides. These compounds all can be used as compatibilizing agents in the present invention as mentioned hereinafter.

Japanese Patent Kokai Nos. 63-108060 and 63-113071 and PCT Laid-Open Application WO88/06173 disclose compositions comprising combination of non-crystalline polyamides with compatibilizing agents, polyphenylene ethers and crystalline polyamides.

EP-A-0269748 discloses a polyphase resin structure produced by kneading (A) 30 to 60 wt % of aliphatic polyamide; (B) 35 to 55 wt % of polyphenylene ether; and (C) 5 to 20 wt % of A-B-A' type diene block copolymer (wherein A and A' represent polymerized vinylaromatic hydrocarbon blocks and B represents a polymerized conjugated diene block). The aliphatic polyamide (A) forms a matrix phase, the polyphenylene ether (B) forms a primary dispersed phase in the matrix phase, and the diene block copolymer (C) forms a secondary dispersed phase in the primary dispersed phase.

In the conventional processes, there have not yet been found optimum structures of thermoplastic resin compositions mainly composed of polyphenylene ethers and polyamides in which A-B-A block copolymers containing styrene are used as impact strength modifiers.

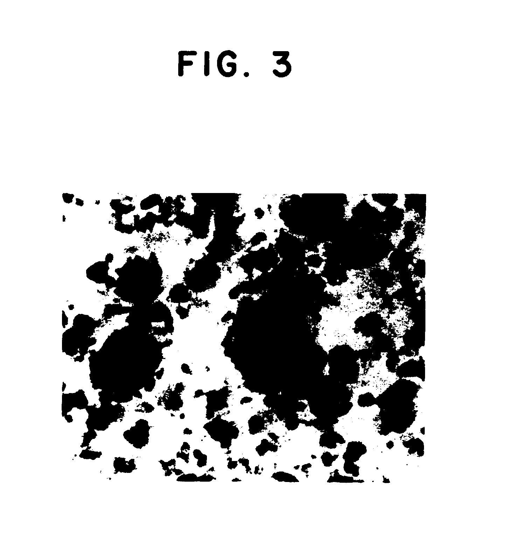

In usual processes, the styrene-containing A-B-A block copolymers (especially, styrene-butadiene-styrene copolymers) are present in sufficiently dispersed state in polyphenylene ethers. (See Fig. 3)

Fig. 3 is a transmission electron photomicrograph of the composition of Comparative Example 4 given hereinafter which shows the structure where polyphenylene ether (grey spheres) is dispersed in matrix (white) and rubber particles (black) are dispersed in the form of lump in the polyphenylene ether.

When the dispersion has such structure, the effect to improve impact strength is lowered. Increase of addition amount of the impact strength modifiers for improving impact strength brings about deterioration of heat resistance. When addition amount of polyphenylene ether is increased for inhibition of deterioration of heat resistance, flowability decreases and moldability deteriorates.

For solving the above problems, the present invention provides a process for producing thermoplastic resin compositions excellent in balancing of flowability, impact resistance and heat resistance by dispersing partially in polyphenylene ether a styrene-containing A-B-A block copolymer in extremely fine layered or spherical micro phase separation structure of 0.02-0.07 µm.

The present invention provides a process for producing a thermoplastic resin composition comprising a polyphenylene ether, a polyamide and a compatibilizing agent, wherein an impact strength modifier block copolymer having the structure A-B-A in which A or B is a polystyrene unit is partially dispersed in said polyphenylene ether and has a layered or spherical micro-phase separation structure of about 0.02 - 0.07 µm thickness or diameter, which process comprises:
(1) melt kneading (i) at least one compatibilizing agent in an amount effective for compatibilization and (ii) the polyphenylene ether and then
(2) adding (iii) the polyamide in an amount necessary for formation of continuous phase and (iv) the impact strength modifier block copolymer having the structure A-B-A (in which A or B is a polystyrene unit) and melt kneading the mixture at a maximum shear rate of 700 sec⁻¹ or more.

The present invention also provides a process for producing a sheet or shaped article comprising moulding a resin produced by the process of the invention.

The present invention also provides a sheet or shaped article composed of a resin produced by the process of the invention.

Fig. 1 is an electron microphotograph which shows the particle structure of the composition of Example 1.

Fig. 2 is an electron microphotograph which shows the particle structure of the composition of Example 4.

Fig. 3 is an electron microphotograph which shows the particle structure of the composition of Comparative Example 4.

The polyphenylene ether (ii) used in the present invention is a polymer obtained by oxidative polymerization of one or more phenol compounds represented by the following formula: 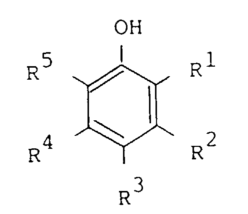 (wherein R¹, R², R³, R⁴ and R⁵ each represents a hydrogen atom, a halogen atom or a substituted or unsubstituted hydrocarbon group and may be identical or different, but at least one of them is a hydrogen atom) with oxygen or a gas containing oxygen using an oxidative coupling catalyst.

Examples of R¹, R², R³, R⁴ and R⁵ in the above formula are hydrogen atom, halogen atoms such as chlorine, bromine, fluorine and iodine, and hydrocarbon or substituted hydrocarbon groups of 1 - 18 carbon atoms, for example, alkyl or substituted alkyl groups such as methyl, ethyl, n-propyl, iso-propyl, n-, sec- or t-butyl, chloroethyl, hydroxyethyl, phenylethyl, hydroxymethyl, carboxyethyl, methoxycarbonylethyl and cyanoethyl, aryl or substituted aryl groups such as phenyl, chlorophenyl, methylphenyl, dimethylphenyl and ethylphenyl, benzyl group and allyl group.

Examples of the phenol compounds as shown by the above formula are phenol, o-, m- or p-cresol, 2,6-, 2,5-, 2,4 or 3,5- dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol, 3-methyl-6-t-butylphenol, thymol and 2-methyl-6-allylphenol. Alternatively, there may be used copolymers of the compounds of the above formula with other phenol compounds, for example, polyhydroxy aromatic compounds such as bisphenol-A, tetrabromo-bisphenol-A, resorcin, hydroquinone and novolak resin.

Preferable compounds are homopolymers of 2,6-dimethylphenol or 2,6-diphenylphenol and copolymers of a large amount of 2,6-dimethylphenol and a small amount of 3-methyl-6-t-butylphenol or 2,3,6-trimethylphenol.

Any oxidative coupling catalysts may be employed for exidative polymerization of the phenol compounds, so long as they have polymerization ability. Examples are cuprous salts-tert. amines such as cuprous chloride-triethylamine and cuprous chloride-pyridine ; cupric salts-amines-alkali metal hydroxides such as cupric chloride-pyridine-potassium hydroxide; manganese salts-primary amines such as manganese chloride-ethanol amine and manganese acetate-ethylene-diamine; manganese salts-alcolates or phenolates such as manganese chloride-sodium methylate and manganese chloride-sodium phenolate; and cobalt salts-tert. amines.

Oxidative polymerization temperature for preparing polyphenylene ether is 40°C or higher (high temperature polymerization) or lower (low temperature polymerization). Either temperature may be used, although polymers produced thereby have different properties.

The polyamide (iii) used in the present invention is at least one polyamide selected from crystalline aliphatic polyamides and aromatic polyamides.

The crystalline aliphatic polyamides used in the present invention include, for example, those which are shown below.

These can be prepared by bonding equimolar saturated aliphatic dicarboxylic acids containing 4 - 12 carbon atoms and aliphatic diamines containing 2 - 12 carbon atoms and in this case, if necessary, diamines, etc. can be used so as to provide amine terminal groups in excess of carboxyl terminal groups in polyamides. On the other hand, it is also possible to use dibasic acids so as to provide excess acidic groups. Similarly, these polyamides can also be satisfactorily prepared from acid producing and amine producing derivatives of said acids and amines such as esters, acid chlorides and amine salts. Typical examples of aliphatic dicarboxylic acids used for preparing the polyamides include adipic acid, pimelic acid, azelaic acid, suberic acid, sebacic acid and dodecanedioic acid. Typical examples of aliphatic diamines include hexamethylenediamine and octamethylenediamine. Besides, these polyamides can also be prepared by self-condensation of lactams.

Examples of polyamides are polyhexamethylene adipamide (nylon 66), polyhexamethylene azelamide (nylon 69), polyhexamethylene sebacamide (nylon 610) and polyhexamethylene dodecanoamide (nylon 612), poly-bis-(p-aminocyclohexyl)methanedodecanoamide, polytetramethylene adipamide (nylon 46) and polyamides produced by ring cleavage of lactams, namely, polycaprolactam (nylon 6) and polylauryllactam. Furthermore, there may be used polyamides produced by polymerization of at least two amines or acids used for producing the above polymers, such as polymers produced from adipic acid, sebacic acid and hexamethylenediamine. Polyamide blends such as blends of nylon 66 and nylon 6 include copolymers such as nylon 66/6.

As these crystalline polyamides, preferred are nylon 46, nylon 6, nylon 66, nylon 11 and nylon 12. More preferred are nylon 6, nylon 66 and mixtures of nylon 6 and nylon 66 at optional mixing ratios. Moreover, terminal functional groups of these polyamides may suitably comprise mainly amine terminal groups or mainly carboxyl terminal groups or mixtures thereof at optional ratios.

The aromatic polyamides used in the present invention are copolyamides containing aromatic components such as polyhexamethylene isophthalamide (nylon 61). These thermoplastic copolyamides containing aromatic components mean melt-polymerizable polyamides which comprise aromatic amino acids and/or aromatic dicarboxylic acids such as p-aminomethylbenzoic acid, p-aminoethylbenzoic acid, terephthalic acid and isophthalic acid as main constituents.

Diamines which are other constituents of polyamides include, for example, hexamethylenediamine, undecamethylenediamine, dodecamethylenediamine, 2,2,4-/2,4,4-trimethylhexamethylenediamine, m-xylylenediamine, p-xylylenediamine, bis(p-aminocyclohexyl)methane, bis(p-aminocyclohexyl)propane, bis(3-methyl-4-aminocyclohexyl)methane, 1,3-bis(aminomethyl) cyclohexane and 1,4-bis(aminomethyl)cyclohexane. Isocyanates may be used in place of diamines. Examples are 4,4′-diphenylmethane diisocyanate and tolylene diisocyanate.

Comonomers which are optionally used have no special limitation. There may be used compounds derived from lactams, ω-amino acid units of 4 - 12 carbon atoms or aliphatic dicarboxylic acids of 4 - 12 carbon atoms and aliphatic diamines of 2 - 12 carbon atoms, for example, lactams or amino acids such as ε-caprolactam, ω-laurolactam, 11-aminoundecanoic acid and 12-amino-dodecanoic acid or equimolar salts of the above-mentioned various diamines and adipic acid, azelaic acid or sebacic acid.

Typical examples of thermoplastic aromatic copolyamides comprising these components are copolyamides of p-aminomethylbenzoic acid and ε-caprolactam (nylon AMBA/6), polyamides comprising 2,2,4-/2,4,4-trimethylhexamethylenediamine·terephthalic acid salt as main components (nylon TMDT, TMDT/61), polyamides comprising hexamethylenediamine·isophthalic acid salt and/or hexamethylenediamine·terephthalic acid salt as main components and bis(p-aminocyclohexyl)methane· isophthalic acid salt and/or terephthalic acid salt or bis(3-methyl-4-aminocyclohexyl)methane·isophthalic acid salt and/or terephthalic acid salt or bis(p-aminocyclohexyl) propane·isophthalic acid salt and/or bis(p-aminocyclohexyl)propane·terephthalic acid salt as comonomer components (nylon 6I/PACM I, nylon 6I/DMPACM I, nylon 6I/PACP I, nylon 6I/6T/PACM I/PACM T, nylon 6I/6T/DMPACM I/DMPACM T, nylon 6I/6T/PACP I/PACP T), polyamides comprising hexamethylenediamine·isophthalic acid salt or hexamethylenediamine·terephthalic acid salt as main components and ε-caprolactam, 12-aminododecanoic acid, hexamethylenediamine·adipic acid salt, bis (p-aminocyclohexyl)methane·adipic acid salt, bis(3-methyl-4-aminocyclohexyl)methane·adipic acid salt or the like as comonomer components (nylon 6I, 6I/6T, 6I/12, 6T/6, 6T/66, 6I/PACM 6, 6I/DMPACM 6), and polyamides comprising bis (p-aminocyclohexyl) methane·isophthalic acid salt or bis(3-methyl, 4-aminocyclohexyl) methane·isophthalic acid salt as main components and hexamethylenediamine-dodecanoic diacid salt, 12-aminododecanoic acid or the like as comonomer components (nylon PACM I/612, nylon DMPACM I/12).

Among these aromatic polyamides, preferred are amorphous aromatic polyamides.

As impact strength modifiers having structure of A-B-A (A or B is styrene) used in the present invention, mention may be made of triblock copolymers and radial teleblock copolymers of styrene and conjugated dienes. Diblock copolymers of styrene and conjugated dienes are not preferred because satisfactory dispersion structure cannot be obtained.

Styrene-butadiene-styrene triblock copolymers are especially preferred.

Furthermore, the number-average molecular weight of the polystyrene chain is preferably 10,000 or more and more preferably 12,000 or more.

According to the present invention, it has been found that thermoplastic resin compositions excellent in balancing of properties can be obtained when impact strength modifiers having partially A-B-A structure have layered or spherical micro phase separation structure of about 0.02 - 0.07 µm in polyphenylene ethers.

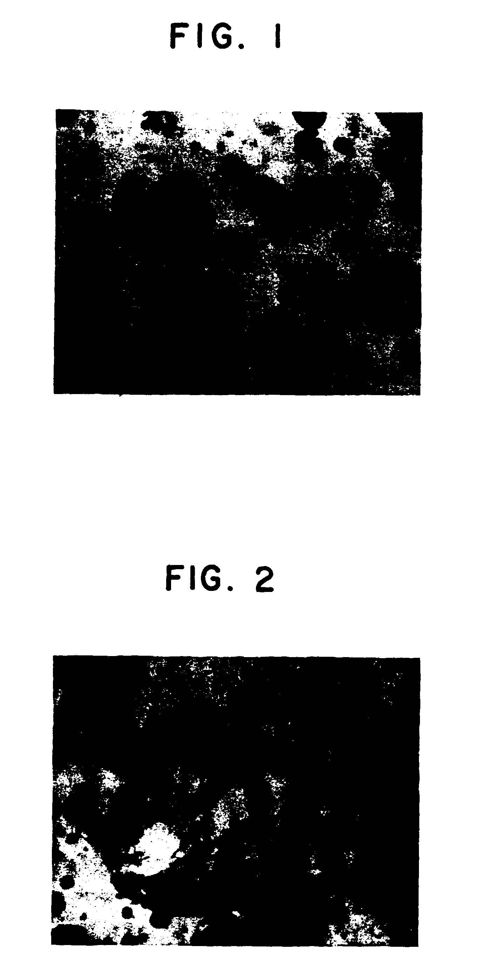

Specific examples of the structure are as shown in Fig. 1 and Fig. 2 and the structure shown in Fig. 3 is not preferred.

Fig. 1 is a transmission electron photomicrograph of the composition obtained in Example 1 given hereinafter which shows the structure in which polyphenylene ether (grey spheres) is dispersed in matrix (white) and rubber particles (black) are dispersed in layered form of about 0.03 µm in the polyphenylene ether.

Fig. 2 is a transmission electron photomicrograph of the composition obtained in Example 4 given hereinafter which shows the structure in which polyphenylene ether (grey spheres) is dispersed in matrix (white) and rubber particles (black) are dispersed in spherical form of about 0.06 µm in the polyphenylene ether.

Size of the layered or spherical micro phase separation structure is measured in the following manner.

That is, a slice is cut out by a microtome by customary method and the slice is dyed with OsO₄·RuO₄ and observed by a transmission electron microscope.

In the case of layered structure, width of one layer is 0.02 - 0.07 µm and in the case of micro phase separation structure having spherical structure, diameter of the spheres is 0.02 - 0.07 µm.

The compatibilizing agent (i) is not critical, but at least one selected from the following groups ① - ⑨ are preferred.
① Liquid diene polymers.
② Epoxy compounds having no ethylenically or acetylenically unsaturated bond.
③ Compounds having in the same molecule both (a) at least one unsaturated group, namely, carbon-carbon double bond or carbon-carbon triple bond and (b) at least one polar group.
④ Oxidized polyolefin wax.
⑤ Quinones.
⑥ Silane compounds having in the same molecule (a) at least one silicon atom bonded to carbon atom through bridge of oxygen and (b) at least ethylenic carbon-carbon double bond or carbon-carbon triple bond and/or a functional group selected from amino group and mercapto group, said functional group being not directly bonded to silicon atom.
⑦ Compounds having in the same molecule (a) - (OR) (wherein R is hydrogen or alkyl, aryl, acyl or carbonyldioxy group) and (b) at least two same or different functional groups selected from carboxylic acids, acid halides, acid anhydrides, acid halide anhydrides, acid esters, acid amides, imides, amino and salts thereof.
⑧ Compounds having in the same molecule (a) acid halide group and (b) at least one of carboxylic acid, carboxylic acid anhydride, acid ester and acid amide groups.
⑨ Polyphenylene ethers made functional by previously reacting at least one compatibilizing agent selected from the groups ① - ③ and ⑤ - ⑧ with polyphenylene ethers and compositions obtained by melt kneading at least one compatibilizing agent selected from the groups ① - ⑧ , polyphenylene ether and a small amount of polyamide. Use of these is also included in one embodiment of the present invention.

The compatibilizing agents of group ① are, for example, homopolymers of conjugated dienes and copolymers of one conjugated diene with other conjugated dienes or with vinyl monomers, namely, styrene, ethylene, propylene and the like which have a number-average molecular weight of 150 - 10000, preferably 150 - 5000. Specific examples are polybutadiene, polyisoprene, poly(butylene/isoprene) and poly(styrene/ butadiene).

The compatibilizing agents of the group ② include (1) condensates of polyhydric phenols (such as bisphenol A, tetrabromobisphenol A and resorcin) with epichlorohydrin and (2) condensates of polyhydric alcohols (such as ethylene glycol, propylene glycol and polyethylene glycol) with epichlorohydrin.

The compatibilizing agents of the group ③ are compounds having in the same molecule an unsaturated group, namely, carbon-carbon double bond or carboncarbon triple bond and a polar group, nemely, a functional group which has affinity or chemical reactivity with amide bond contained in polyamide resin, carboxyl group or amino group present at the terminal of chain. Examples of the functional group are carboxylic acid group, groups derived from carboxylic acids, namely, various salts, esters, acid amides, acid anhydrides, imides, acid azides or acid halides derived by substitution of hydrogen atom or hydroxyl group of carboxyl group, functional groups such as oxazoline group and nitrile group, epoxy group, amino group, hydroxyl group and isocyanate group. Compounds having both the unsaturated group and the polar group, namely, unsaturated carboxylic acids, unsaturated carboxylic acid derivatives, unsaturated epoxy compounds, unsaturated alcohols, unsaturated amines and unsaturated isocyanates can be used.

Examples of the compatibilizing agents of group ③ are maleic anhydride, maleic acid, fumaric acid, maleimide, maleic hydrazide, methyl nadic anhydride, dichloromaleic anhydride, maleinamide, itaconic acid, itaconic anhydride, natural fats and oils such as soybean oil, tung oil, caster oil, linseed oil, hempseed oil, cottonseed oil, sesame oil, rapeseed oil, peanut oil, tsubaki seed oil, olive oil, coconut oil and sardine oil, epoxidized natural fats and oils such as epoxidized soybean oil, unsaturated carboxylic acids such as acrylic acid, butenoic acid, crotonic acid, vinylacetic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethyl-crotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, tetracosenoic acid, mycolipenic acid, 2,4-pentadienoic acid, 2,4-hexadienoic acid, diallylacetic acid, geranic acid, 2,4-decadienoic acid, 2,4-dodecadienoic acid, 9,12-hexadecadienoic acid, 9,12-octadecadienoic acid, hexadecatrienic acid, linolic acid, linoleic acid, octadecatrienoic acid, eicosadienoic acid, eicosatrienoic acid, eicosatetraenoic acid, ricinoleic acid, eleostearic acid, oleic acid, eicosapentaenoic acid, erucic acid, docosadienoic acid, docosatrienoic acid, docosatetraenoic acid, docosapentaenoic acid, tetracosenoic acid, hexacosenoic acid, hexacodienoic acid, octacosenoic acid and tetracontenoic acid, esters, acid amides, anhydrides of these unsaturated carboxylic acids; unsaturated alcohols such as allyl alcohol, crotyl alcohol, methylvinyl-carbinol, allylcarbinol, methylpropenylcarbinol, 4-pentene-1-ol, 10-undecene-1-ol, propalgyl alcohol, 1,4-pentadiene -3-ol, 1,4-hexadiene-3-ol, 3,5-hexadiene-2-ol, 2,4-hexadiene-1-ol, alcohols represented by the formulas CₙC₂ₙ₋₅OH, CₙC₂ₙ₋₇OH, CₙC₂ₙ₋₉OH (wherein n is a positive integer), 3-butene-1,2-diol, 2,5-dimethyl-3-hexene -2,5-diol, 1,5-hexadiene-3,4-diol and 2,6-octadiene -4,5-diol, unsaturated amines prepared by substituting the OH group of these unsaturated alcohols with -NH₂ group, glycidyl acrylate, glycidyl methacrylate and allyl glycidyl ether.

Further examples are low molecular weight polymers, for example, having an average molecular weight of 500-10000 or high molecular weight polymers, for example, having an average molecular weight of higher than 10000, such as of butadiene and isoprene, to which maleic anhydride or a phenol is added or into which amino group, carboxyl group, hydroxyl group or epoxy group is introduced, and allyl isocyanate.

Additional examples are reaction products of maleic anhydride with diamines such as those which have the structure represented by the following formula: 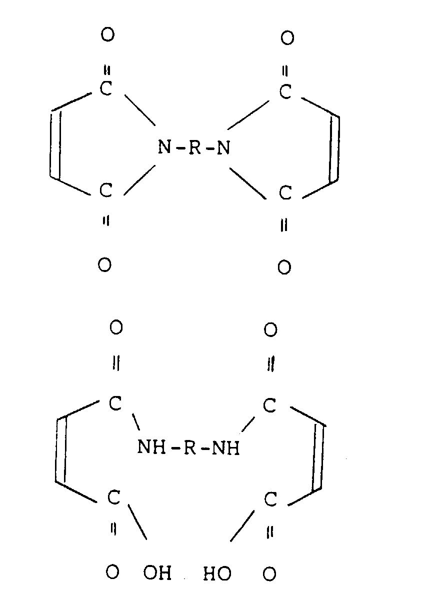 (wherein R represents an aliphatic or aromatic group).

It is needless to say that the compounds having both unsaturated group and polar group in the same molecule include those which have two or more unsaturated groups and two or more polar groups which may be identical or different. Two or more specific compounds may also be used.

Among them, preferred are maleic anhydride, maleic acid, fumaric acid, itaconic anhydride, itaconic acid, glycidyl acrylate and glycidyl methacrylate and more preferred are maleic anhydride and fumaric acid.

The compatibilizing agents of group ④ are usually prepared by oxidation of polyolefin wax in the air or suspension and polyethylene wax is preferred.

The compatibilizing agents of group ⑤ are compounds having quinone structure and examples are 1,2- and 1,4-benzoquinone, 2,6-diphenylquinone, and 2-chloro-1,4-benzoquinone.

The compatibilizing agents of group ⑥ are silane compounds having in the same molecule both (a) at least one silicon atom bonded to carbon atom through bridge of oxygen and (b) at least ethylenic carbon-carbon double bond or carbon-carbon triple bond and/or a functional group selected from amino group and mercapto group, said functional group being not directly bonded to silicon atom. Examples are γ-aminopropyltriethoxysilane and 2-(3-cyclohexyl)ethyltrimethoxysilane.

The compatibilizing agents of group ⑦ are aliphatic polycarboxylic acids, acid esters or acid amides thereof which are represented by the formula: (R^{I}O)ₘR(COOR^{II})ₙ(CONR^{III}R^{IV})ₗ (wherein R is a linear or branched saturated aliphatic hydrocarbon having 2 - 20 carbon atoms, preferably 2 - 10 carbon atoms, R^{I} is hydrogen or an alkyl, aryl, acyl or carbonyldioxy group having 1 - 10, preferably 1 - 6, more preferably 1 - 4 carbon atoms, R^{II} is hydrogen or an alkyl or aryl group having 1 - 20, preferably 1 - 10 carbon atoms, R^{III} and R^{IV} are independently hydrogen or an alkyl or aryl group having 1 - 10, preferably 1 - 6, most preferably 1 - 4 carbon atoms, m is 1, (n+1) is 2 or more and preferably 2 or 3, n and 1 are each 0 or more, (OR^{I}) is present at α- or β-position in respect to the carbonyl group and at least two carbonyl groups are separated by 2 - 6 carbon atoms, where it is clear that when carbon numbers of R^{I}, R^{II}, R^{III} and R^{IV} are less than 6, these are not aryl group.).

Examples of these polycarboxylic acids are malic acid, and agaricic acid. Anhydrides and hydrates of these polycarboxylic acids may also be used. Examples of acid esters are acetyl citrate and mono- or distearyl citrate.

Examples of acid amides are N,N′-diethylcitric acid amide and N-dodecylcitric acid amide. Furthermore, derivatives of the polycarboxylic acids, especially preferably salts may also be used.

The compatibilizing agents of group ⑧ are compounds having in the same molecule at least one acid halide group, most preferably acid chloride group and at least one carboxylic acid group, carboxylic acid anhydride group, acid ester group or acid amide group, preferably carboxylic acid group or acid anhydride group.

Examples are trimellitic acid chloride and trimellitic acid chloride anhydride.

Use of compatibilizing agent (i) in an amount effective for compatibilization can attain the object of the present invention, but amount of the compatibilizing agent (i) is preferably 0.01 - 20 parts by weight based on 100 parts by weight of (ii), (iii) and (iv). If it is less than 0.01 part by weight, the effect is small and if it is more than 20 parts by weight, the effect no longer increases.

In the present invention, homopolymers of alkenyl aromatic compounds or random copolymers of alkenyl aromatic compounds and unsaturated compounds may be added as additional component.

Furthermore, inorganic fillers and/or further impact strength modifiers (rubbers) may also be used as additional component.

The following nonlimiting examples illustrate the present invention. The blending ratios in the examples are all % by weight unless otherwise notified.

### Examples 1-5 and Comparative Examples 1-5

A twin-screw extruder having three zones (TEX-30 manufactured by Nippon Seikosho K.K.) was used.

The following components A-1 and A-2 were introduced from initiation portion of the first zone of the extruder and kneaded at a cylinder temperature of 260°C.

Subsequently, the following components B-1 and B-2 were introduced from upper opening of initiation portion of the second zone and kneaded at a cylinder temperature of 230°C.

Furthermore, degassing was carried out by drawing a vacuum at 50 Torr from an opening for degassing in the third zone of the extruder.

The composition was taken out from the extruder through an orifice, cooled by water bath, granulated by a pelletizer and then dried.

Details of the components are as follows.
A-1-1: Maleic anhydride
A-1-2: Fumaric acid
A-1-3: Citric acid
A-2: Poly-(2,6-dimethyl-1,4-phenylene)-ether (having a reduced viscosity of 0.54 dl/g measured in a chloroform solution of 0.5 g/dl at 25°C)
B-1-1: Polyamide 6 having a number-average molecular weight of 17500 (A1030BRL manufactured by Unitika, Ltd., -NH₂:60mmol/kg, -COOH:60 mmol/kg)
B-1-2: Polyamide 6 having a number-average molecular weight of 12000 (A1020BRL manufactured by Unitika, Ltd., -NH₂:84 mmol/kg, -COOH:84 mmol/kg)
B-1-3: Polyamide 6,6 (A-100 manufactured by ICI Inc.)
B-2-1: Cariflex TR1101 manufactured by Shell Chemical Co., (molecular weight of styrene part: 15000)
B-2-2: Cariflex TR1102 α,a styrene-butadiene-styrene block copolymer manufactured by Shell Chemical Co., (molecular weight of styrene part: 10000)
B-2-3: Styrene-butadiene-styrene copolymer obtained by anion polymerization (having molecular weights of 5000 - 30000 - 5000)
B-2-4: Styrene-butadiene-styrene copolymer obtained by anion polymerization (having molecular weights of 13500 - 36000 - 13500)

The resulting composition was molded into test pieces by an injection molding machine IS220EN (manufactured by Toshiba Machine Co., Ltd.) for measurement of Izod impact strength (ASTM D256, notched test piece of 3.2 mm thick, 23°C, -30°C) and hot distortion temperature (H.D.T., ASTM 648, 4.6 kg load).

Further, structure of impact strength modifier in polyphenylene ether was examined by observation with transmission electron microscope. Results of examination of the compositions in Example 1, Example 4 and Comparative Example 4 are shown in Fig. 1, Fig. 2 and Fig. 3 (20000x magnification), respectively.

Figs. 1 and 2 are photographs of the compositions obtained in Examples 1 and 4 which show the structures where polyphenylene ether (grey spheres) is dispersed in matrix (white) and rubber particles (black) are dispersed in the form of micro layers (Fig. 1) or in the form of micro spheres (Fig. 2) in the polyphenylene ether. Compositions having such structure are high in impact strength. On the other hand, in the photograph of Fig. 3 which shows the composition obtained in Comparative Example 4, rubber particles are dispersed in the form of relatively large lumps and this composition is low in impact strength.

Blending ratio, process for preparation and results of tests are shown in Table 1.

Comparative examples were carried out in the same manner and blending ratio and results of tests are shown in Table 2.

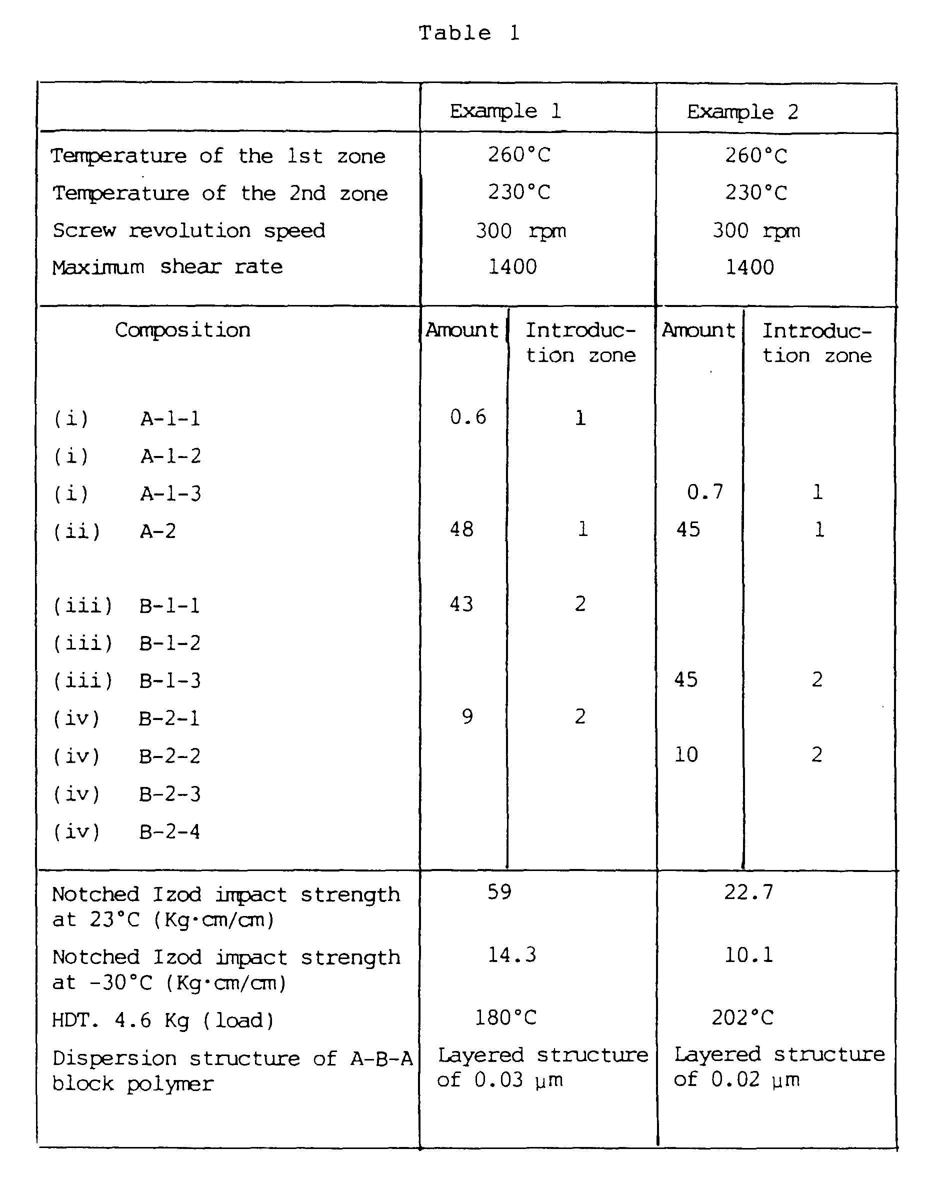

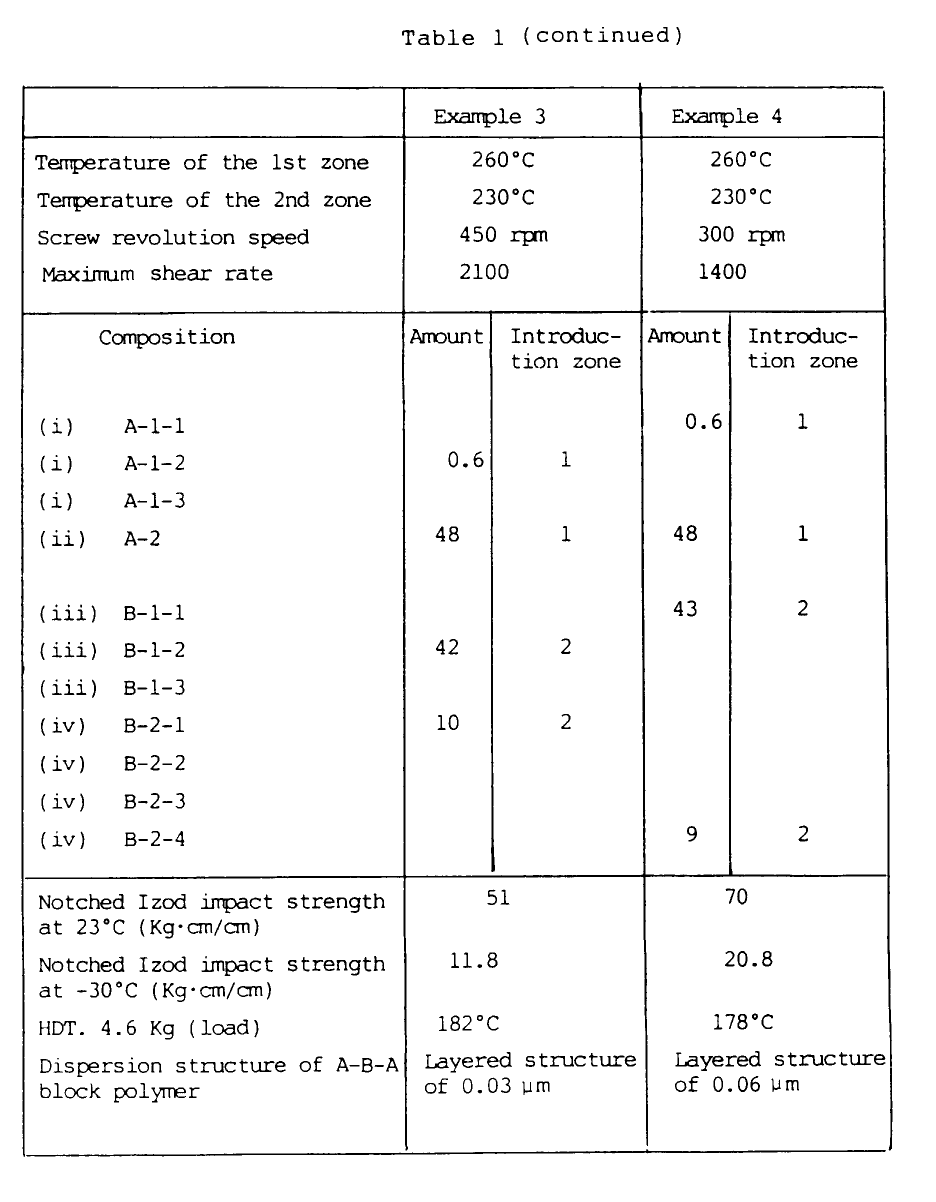

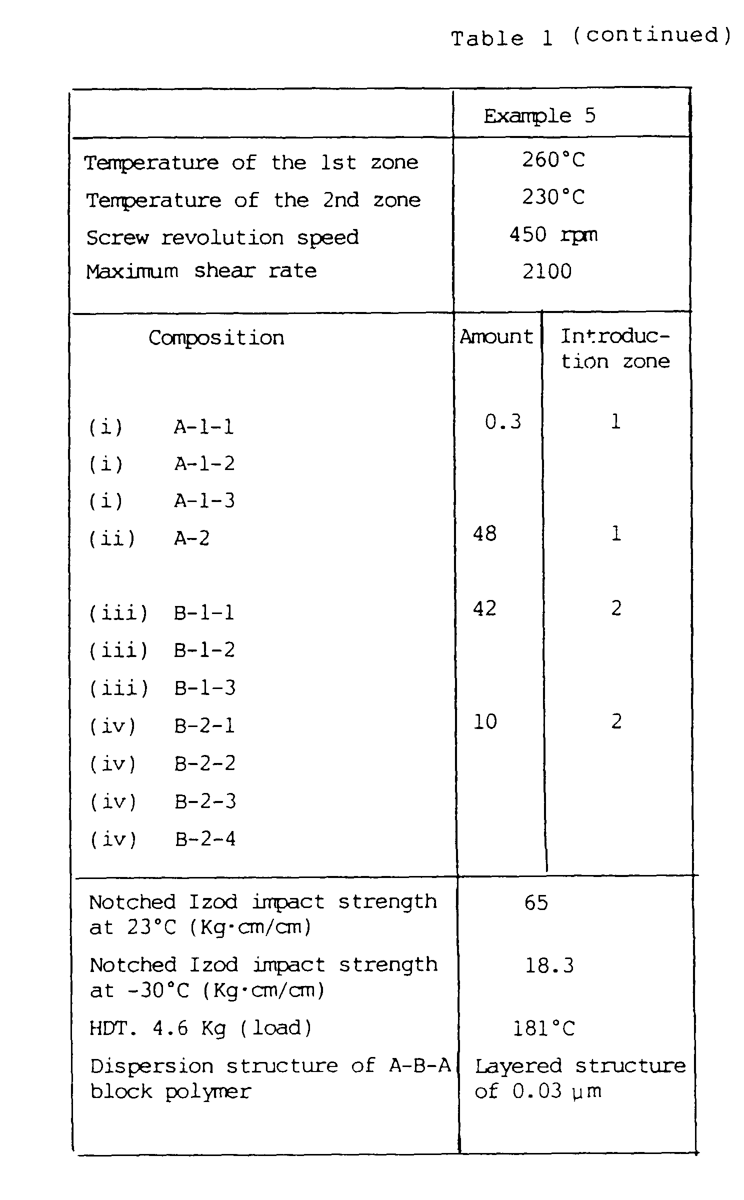

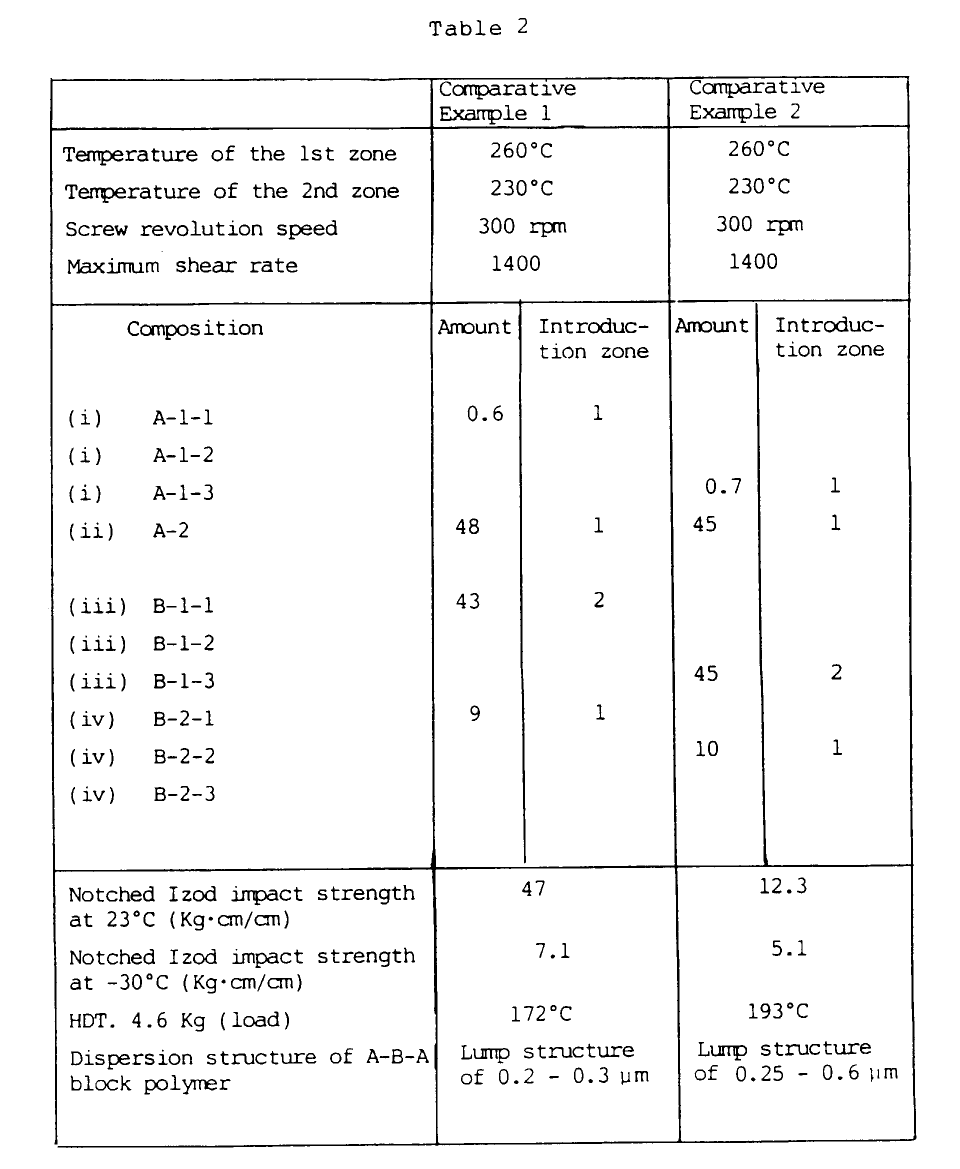

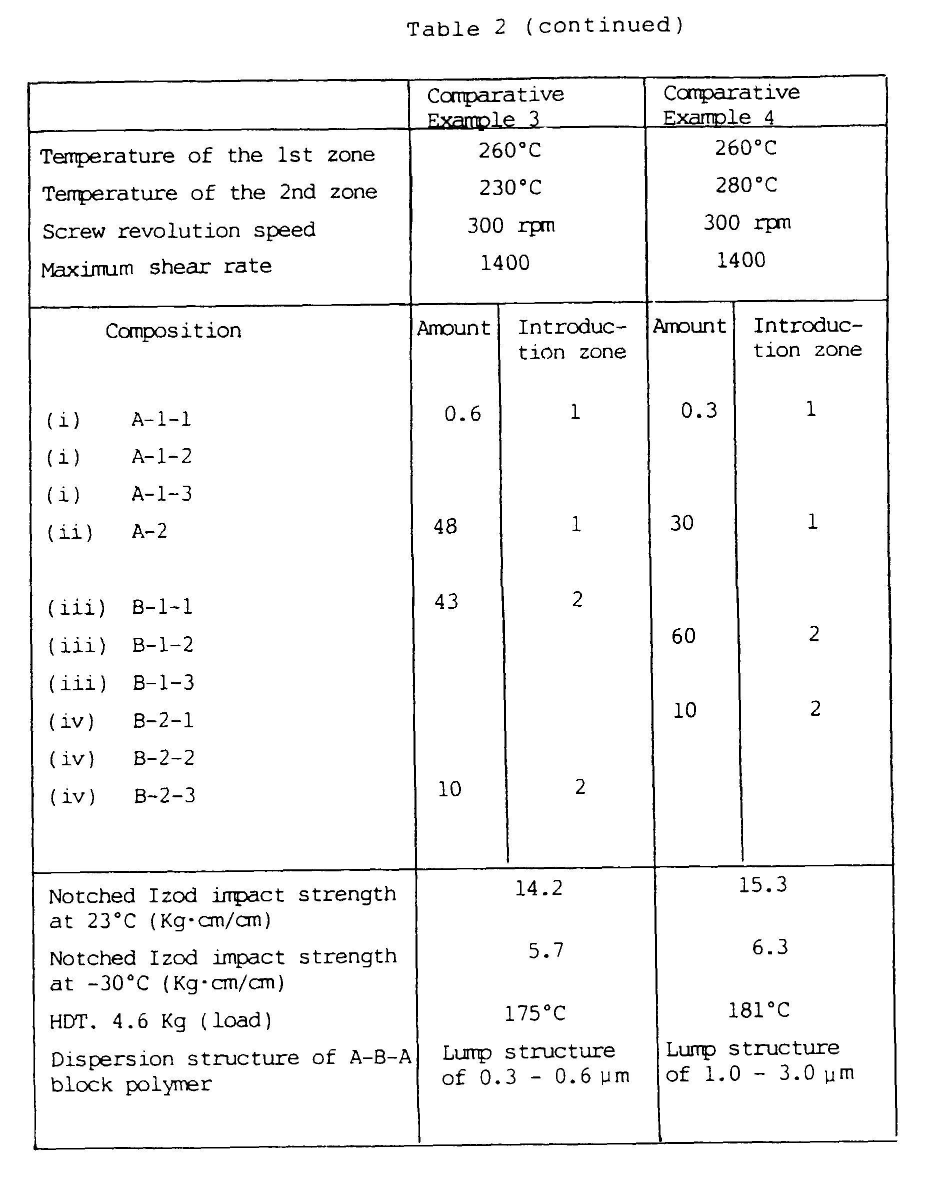

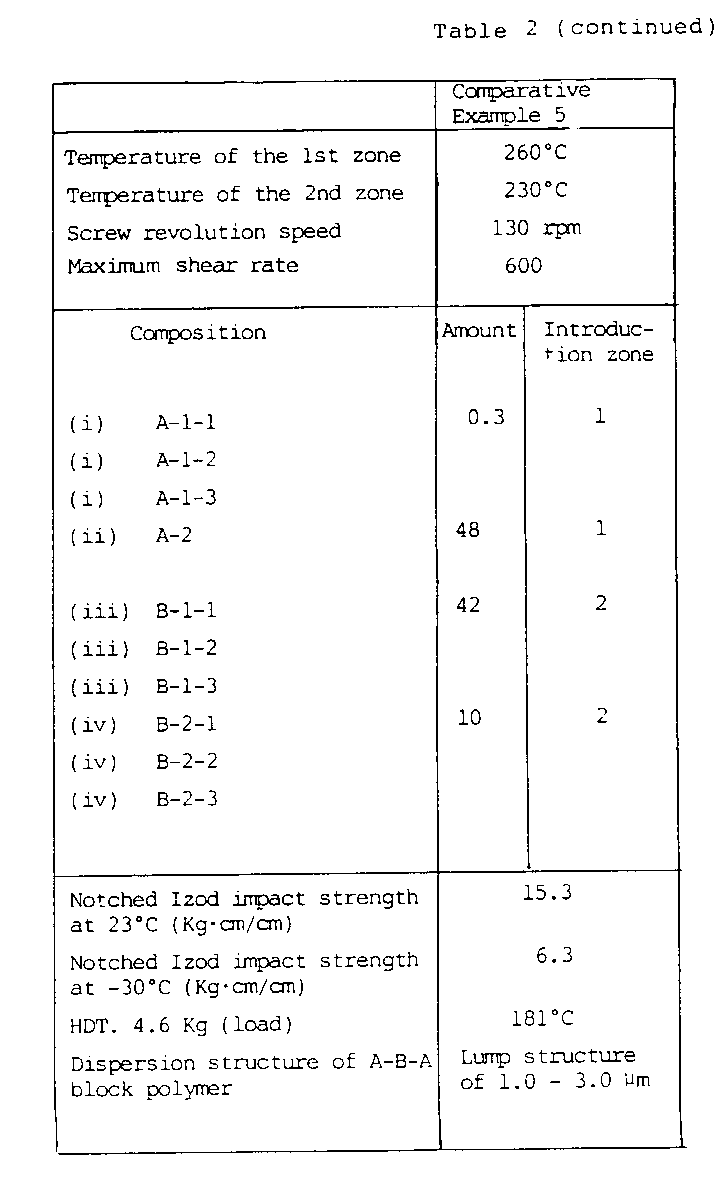

## Claims

1. A process for producing a thermoplastic resin composition comprising a polyphenylene ether, a polyamide and a compatibilizing agent, wherein an impact strength modifier block copolymer having the structure A-B-A in which A or B is a polystyrene unit is partially dispersed in said polyphenylene ether and has a layered or spherical micro-phase separation structure of about 0.02 - 0.07 µm thickness or diameter, which process comprises:
(1) melt kneading (i) at least one compatibilizing agent in an amount effective for compatibilization and (ii) the polyphenylene ether and then
(2) adding (iii) the polyamide in an amount necessary for formation of continuous phase and (iv) the impact strength modifier block copolymer having the structure A-B-A (in which A or B is a polystyrene unit) and melt kneading the mixture at a maximum shear rate of 700 sec⁻¹ or more.

2. A process according to claim 1 wherein the impact strength modifier having the structure A-B-A is styrene-butadiene-styrene block copolymer.

3. A process according to claim 2 wherein the number-average molecular weight of polystyrene units in the styrene-butadiene-styrene block copolymer is 10,000 or more.

4. A process for producing a sheet or shaped article comprising moulding a resin produced by a process according to any one of claims 1 to 3.

5. A sheet or shaped article composed of a resin produced by a process according to any one of claims 1 to 3.

## Patentansprüche

1. Verfahren zur Herstellung einer thermoplastischen Harzzusammensetzung, die einen Polyphenylenether, ein Polyamid und ein Kompatibilisierungsmittel umfaßt, worin ein die Schlagzähigkeit modifizierendes Blockcopolymer mit der Struktur A-B-A, worin A oder B eine Polystyrol-Einheit darstellen, teilweise in dem Polyphenylenether dispergiert ist und eine geschichtete bzw. kugelförmige Mikrophasen-Trennstruktur mit einer Dicke bzw. einem Durchmesser von etwa 0,02 - 0,07 µm aufweist, welches Verfahren umfaßt:
(1) Schmelzkneten (i) mindestens eines Kompatibilisierungsmittels in einer zur Kompatibilisierung wirksamen Menge und (ii) des Polyphenylenethers und anschließend
(2) Zugabe (iii) des Polyamids in einer zur Bildung einer kontinuierlichen Phase erforderlichen Menge und (iv) des die Schlagzähigkeit modifizierenden Blockcopolymers mit der Struktur A-B-A (worin A oder B eine Polystyrol-Einheit darstellen) und Schmelzkneten der Mischung bei einer maximalen Scherrate von 700 Sek.⁻¹ oder mehr.

2. Verfahren nach Anspruch 1, worin das die Schlagzähigkit modifizierende Mittel mit der Struktur A-B-A ein Styrol-Butadien-Styrol-Blockcopolymer ist.

3. Verfahren nach Anspruch 2, worin das Zahlenmittel des Molekulargewichts von Polystyrol-Einheiten in dem Styrol-Butadien-Styrol-Blockcopolymer 10000 oder mehr beträgt.

4. Verfahren zur Herstellung einer Platte oder eines Formgegenstands, umfassend das Formen eines mit Hilfe eines Verfahrens gemäß irgendeinem der Ansprüche 1 bis 3 hergestellten Harzes.

5. Platte oder Formgegenstand, zusammengesetzt aus einem mit Hilfe eines Verfahrens gemäß irgendeinem der Ansprüche 1 bis 3 hergestellten Harz.

## Revendications

1. Procédé de préparation d'une composition de résine thermoplastique comprenant un poly(oxyde de phénylène), un polyamide et un agent de compatibilité, dans lequel un copolymère séquencé servant à modifier la résistance au choc et ayant la structure A-B-A, A ou B étant un motif de polystyrène, est dispersé partiellement dans le poly(oxyde de phénylène) et a une structure de séparation de microphases en couche ou sphérique d'un diamètre d'environ 0,02 à 0,07 µm, ce procédé consistant :
(1) à malaxer (i) à l'état fondu au moins un agent de compatibilité en une quantité efficace pour l'obtention de la compatibilité et (ii) le poly(oxyde de phénylène), puis
(2) à ajouter (iii) le polyamide en une quantité nécessaire pour la formation d'une phase continue et (iv) le copolymère séquencé servant d'agent modifiant la résistance au choc ayant la structure A-B-A (A ou B étant un motif de polystyrène) et à malaxer à l'état fondu le mélange à une vitesse de cisaillement maximum de 700 sec⁻¹ ou supérieure à 700 sec⁻¹.

2. Procédé selon la revendication 1, dans lequel l'agent modifiant la résistance au choc de structure A-B-A est un copolymère séquencé de styrène-butadiène-styrène.

3. Procédé selon la revendication 2, dans lequel la masse moléculaire moyenne en nombre des motifs de polystyrène du copolymère séquencé styrène-butadiène-styrène est de 10 000 ou supérieure à 10 000.

4. Procédé de fabrication d'une feuille ou d'un objet façonné, qui consiste à mouler une résine préparée par un procédé selon l'une quelconque des revendications 1 à 3.

5. Feuille ou objet façonné composé d'une résine préparée par un procédé selon l'une quelconque des revendications 1 à 3.
